# EUROPEAN PATENT SPECIFICATION

(11) **EP 3 865 352 B1**
(45) Date of publication and mention of the grant of the patent: **03.04.2024**
(21) Application number: 20157380.5
(22) Date of filing: 14.02.2020
(51) Int. Cl.: B60R 21/01

(54) **RESTRAINT CONTROL MODULE**
RÜCKHALTEKONTROLLMODUL
MODULE DE COMMANDE DE RETENUE

(43) Date of publication of application: 18.08.2021
(73) Proprietor: Veoneer Sweden Safety Systems AB, 10302 Stockholm (SE)
(72) Inventor: KUREK, Denis, 95800 Cergy-Pontoise (FR)
(74) Representative: Reichert & Lindner Partnerschaft Patentanwälte

(56) References cited:
- EP-A1- 1 769 974
- EP-A1- 2 682 309
- WO-A1-2009/058054
- US-A1- 2008 218 321
- US-A1- 2014 288 781

## Description

The invention relates to a restraint control module (RCM) for a vehicle, especially to the energy supply of such an RCM.

In a vehicle, an RCM is used to trigger emergency functionality and to supply energy for such emergency functionality. The emergency functionality may in particular include the firing of an air bag and / or the tightening of safety belts.

It is known that RCMs are configured to operate for a period of time, known as the autarky phase, after disconnection from a battery of the vehicle, which battery usually supplies energy for the operation of the RCM. According to the state of the art, the RCM has a capacitance, the role of which is twofold: The capacitance supplies energy for the operation of the RCM during the autarky phase, and the capacitance provides energy for the emergency functionality both during the autarky phase and while the RCM is supplied from the battery.

European patent application EP 2 682 309 A1 discloses a restraint control module according to the preamble of claim 1.

The growing demands, in particular in the high-end segment of the market, require ever larger capacitances to supply both increasing energy needs for supply of RCM operation and an emergency functionality comprising an ever increasing number of separate actions, which may be well above 20. Employing ever increasing capacitances becomes more and more impractical.

It is an object of the invention to overcome this problem, i.e. to provide an RCM which can meet the increasing demands both for supply of RCM operation and for emergency functionality.

This object is achieved by an RCM according to claim 1.

The dependent claims relate to advantageous embodiments.

The restraint control module according to the invention has a supply capacitance for supplying the restraint control module with energy during a period in which the restraint control module is disconnected from a battery of the vehicle. The restraint control module in addition has a deployment capacitance, which is different from the supply capacitance and stores energy for emergency functionality to be triggered by the restraint control module.

In this way, the supply capacitance only has to be large enough to supply the RCM operation during the autarky phase, it does not have to store energy for emergency functionality. Energy for emergency functionality is provided from the separate deployment capacitance. As the deployment capacitance is for supplying energy for emergency functionality only, its energy supply is not diminished as long as no emergency functionality is triggered. Therefore, the separate deployment capacitance can reliably provide energy for emergency functionality even if RCM operation has been supplied from the supply capacitance for a long time already. This evidently is not possible with prior art systems where RCM operation and emergency functionality are provided with energy from a common capacitance. With the RCM according to the invention, both the supply capacitance and the deployment capacitance can be smaller.

After emergency functionality has been triggered and supplied with energy from the deployment capacitance, a stage may be reached at which the deployment capacitance cannot provide further energy for emergency functionality, for example because the output voltage of the deployment capacitance has fallen below a threshold, and therefore the triggering of emergency functionality is disabled. According to the invention, the RCM then switches the deployment capacitance to supplying RCM operation in addition to the supply capacitance, if the RCM is disconnected from the battery of the vehicle. Therefore, a smaller supply capacitance can be used, because part of the energy for supply of RCM operation will come from the deployment capacitance.

Once the stage of disabled emergency functionality has been reached, RCM operation may be reduced, and for example limited to recording of event data.

In an embodiment, the RCM is configured to supply one or more sensors for pressure and / or acceleration with energy if connection to the battery of the vehicle is lost.

In an embodiment, the RCM is configured to supply a communication system for communication with a roadside unit with energy if connection to the battery of the vehicle is lost.

The RCM according to the invention allows to use smaller capacitances, in particular also a smaller deployment capacitance. This in turn means that the deployment capacitance requires less time for charging after power-on of the RCM or for recharging than a single, larger capacitance in a prior art RCM (all other conditions being equal).

Below the invention and its advantages will be illustrated further with reference to the accompanying figure.

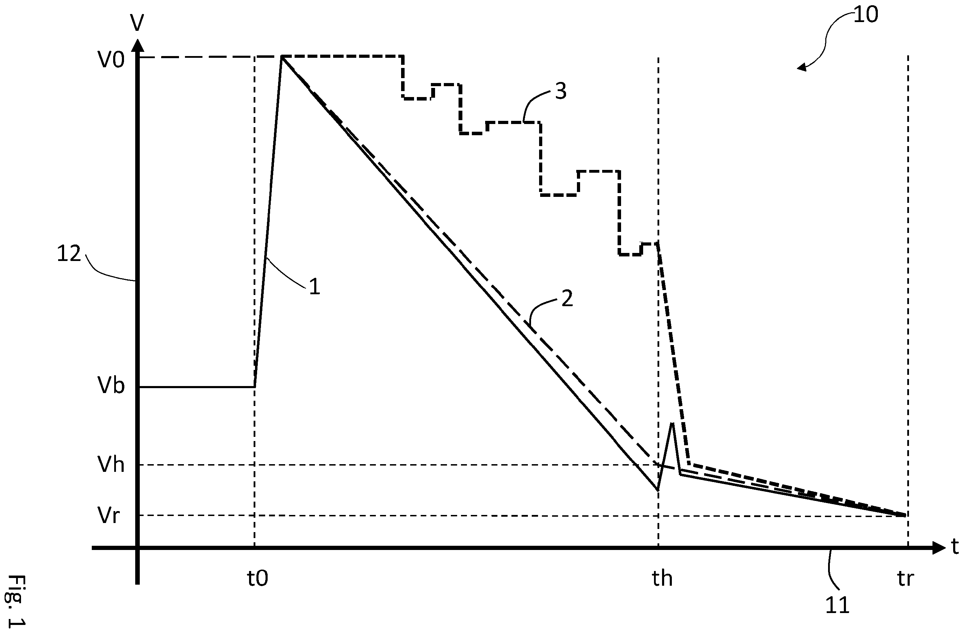

- Figure 1: shows a diagram illustrating the behaviour of an RCM according to the invention.

The figure is for illustration only and schematically shows the behaviour of an embodiment of an RCM according to the invention. The figure is not to be construed as a limitation of the invention.

**Fig. 1** shows a diagram 10 illustrating the behaviour of an RCM according to the invention. The abscissa 11 shows time, the ordinate 12 voltage. Curve 1 shows the supply voltage (voltage at the power input of the RCM after the anti-reverse protection), curve 2 the voltage of the supply capacitance, and curve 3 the voltage of the deployment capacitance. Initially, the RCM is supplied from a battery of the vehicle at voltage Vb. At time t0, the connection to the battery is lost, and RCM operation is supplied from the supply capacitance, initially at voltage V0. The voltage of the deployment capacitance starts also at V0 and is maintained until a first emergency functionality is triggered, resulting in a sharp drop (shown as a step) of the voltage. With the further triggering of emergency functionality, further drops (steps) in the voltage of the deployment capacitance occur. From time t0 to time th the RCM is fully functional, all sensors and roadside unit communication systems are operational, the RCM receives acceleration and/or pressure data. At time th the voltage of the supply capacitance has dropped to a threshold Vh for entering a "housekeeping" state; here most of RCM operation is stopped, apart from the recording of the current RCM state, possibly along with further event data, in an event data recorder and / or other non-volatile memory of the RCM. The deployment capacitance is dimensioned to guarantee energy supply for all emergency functionality without time limitation. After triggering all required emergency functionality, the remaining energy in the deployment capacitance may be used for supplying the limited RCM operation beyond time th. This switching of the deployment capacitance to support of the supply capacitance results in a temporary increase of the supply voltage. All voltages shown continue to decrease, until at time tr a threshold Vr for RCM reset is reached.

### List of Reference Signs

- 1: supply voltage curve
- 2: supply capacitance voltage curve
- 3: deployment capacity voltage curve
- 10: diagram
- 11: abscissa
- 12: ordinate
- t0: time battery connection is lost
- th: time entering housekeeping state
- tr: time of reset
- Vb: battery voltage
- V0: initial voltage of supply capacitance
- Vh: voltage threshold for entering housekeeping state
- Vr: voltage threshold for reset

## Claims

1. Restraint control module for a vehicle, including
a supply capacitance for supplying the restraint control module with energy during a period in which the restraint control module is disconnected from a battery of the vehicle;
a deployment capacitance, different from the supply capacitance, the deployment capacitance storing energy for emergency functionality to be triggered by the restraint control module;
**characterised in that**
the restraint control module is configured to use energy stored in the deployment capacitance for supplying the restraint control module if the triggering of emergency functionality is disabled and the restraint control module is disconnected from the battery of the vehicle.

2. Restraint control module according to claim 1, configured to supply one or more sensors for pressure and / or acceleration with energy if connection to the battery of the vehicle is lost.

3. Restraint control module according to one of the preceding claims, configured to supply a communication system for communication with a roadside unit with energy if connection to the battery of the vehicle is lost.

## Patentansprüche

1. Rückhaltekontrollmodul für ein Fahrzeug, umfassend
eine Versorgungskapazität zur Versorgung des Rückhaltekontrollmoduls mit Energie während eines Zeitraums, in dem das Rückhaltekontrollmodul von einer Batterie des Fahrzeugs getrennt ist;
eine Auslösekapazität, die sich von der Versorgungskapazität unterscheidet, wobei die Auslösekapazität Energie für eine durch das Rückhaltekontrollmodul auszulösende Notfunktion speichert;
**dadurch gekennzeichnet, dass**
das Rückhaltekontrollmodul so konfiguriert ist, dass es die in der Auslösekapazität gespeicherte Energie zur Versorgung des Rückhaltekontrollmoduls verwendet, wenn die Auslösung der Notfunktion deaktiviert und das Rückhaltekontrollmodul von der Fahrzeugbatterie getrennt ist.

2. Rückhaltekontrollmodul nach Anspruch 1, das so konfiguriert ist, dass es einen oder mehrere Sensoren für Druck und/oder Beschleunigung mit Energie versorgt, wenn die Verbindung zur Fahrzeugbatterie unterbrochen ist.

3. Rückhaltekontrollmodul nach einem der vorhergehenden Ansprüche, das so konfiguriert ist, dass es ein Kommunikationssystem für die Kommunikation mit einer straßenseitigen Einheit mit Energie versorgt, wenn die Verbindung zur Fahrzeugbatterie unterbrochen ist.

## Revendications

1. Module de commande de retenue pour un véhicule, comprenant
une capacité d'alimentation pour fournir de l batterie énergie au module de commande de retenue pendant une période pendant laquelle le module de commande de retenue est déconnecté de la batterie du véhicule ;
une capacité de déploiement, différente de la capacité d'alimentation, la capacité de déploiement stockant d'énergie pour une fonctionnalité d'urgence à déclencher par le module de commande de retenue ;
**caractérisé en ce que**
le module de commande de retenue est configuré pour utiliser d'énergie stockée dans la capacité de déploiement pour alimenter le module de commande de retenue si le déclenchement de la fonctionnalité d'urgence est désactivé et le module de commande de retenue est déconnecté de la batterie du véhicule.

2. Module de commande de retenue selon la revendication 1, configuré pour alimenter en énergie un ou plusieurs capteurs de pression et/ou d'accélération en cas de perte de connexion avec la batterie du véhicule.

3. Module de commande de retenue l'une des revendications précédentes, configuré pour alimenter en énergie un système de communication avec une unité de bord de route en cas de perte de connexion avec la batterie du véhicule.
